# EUROPEAN PATENT APPLICATION

(11) **EP 1 647 389 A1**
(43) Date of publication of application: **19.04.2006**
(21) Application number: 04747757.5
(22) Date of filing: 20.07.2004
(51) Int. Cl.: B29C 45/56, B29L 23/20

(54) **MOLDING METHOD, MOLD FOR MOLDING, MOLDED PRODUCT, AND MOLDING MACHINE**

(30) Priority: 18.07.2003 JP 2003198957
(71) Applicant: SUMITOMO HEAVY INDUSTRIES, LTD., Shinagawa-ku, Tokyo 141-8686 (JP)
(72) Inventor: Takigawa, N., Sunitomo Heavy Ind., Ltd, Inage-ku, Chiba-shi, Chiba 2630001 (JP)
(74) Representative: Wagner, Karl H.
(86) International application number: PCT/JP2004/010293
(87) International publication number: WO 2005/007383

(57) **Abstract**

Before completion of a mold closing step of a mold apparatus, a movable member of one mold is pressed against the other mold, the movable member partially defining a cavity of the mold apparatus; charging a molding material into the cavity of the mold apparatus is started; and after completion of the mold closing step, a mold clamping step of the mold apparatus is performed so as to produce a molded product. The movable member, which partially constitutes a mold, is operated in the mold closing step so as to prevent leakage, through a clearance between parting faces, of a molding material which has begun to be charged into a cavity of the mold before completion of the mold closing step, whereby, even when the mold has a simple structure using no special component members, a molded product having a shape resembling that of a three-dimensional, deep-bottomed, concave container having a thin side wall can be produced in short time.

## Description

### TECHNICAL FIELD

The present invention relates to a molding method, a mold for molding, a molded product, and a molding machine.

### BACKGROUND ART

Conventionally, in a resin molding machine, such as an injection molding machine, a resin that is melted in a heating cylinder through application of heat is injected under high pressure into a cavity of a mold apparatus, and the molten resin is cooled and solidified within the cavity, thereby producing a molded product. To perform such molding, the mold apparatus includes a stationary mold and a movable mold. A mold-clamping apparatus advances or retreats the movable mold so as to bring the movable mold into contact with or move the movable mold away from the stationary mold, thereby performing mold opening/closing; i.e., mold closing, mold clamping, and mold opening (see, for example, Japanese Patent Application Laid-Open (kokai) No. H06-293043).

In order to produce, in a short time, a molded product having a shape resembling that of a three-dimensional, deep-bottomed, concave container having a thin side wall, the inventors of the present invention have proposed a molding method including starting, before completion of a mold closing step of a mold apparatus, charging of resin into a cavity of the mold apparatus; charging the resin into the cavity in a predetermined amount by means of controlling the position of a screw of an injection apparatus; completing, before completion of the mold closing step, the charging of the resin in the predetermined amount; and performing, after completion of the mold closing step, a mold clamping step of the mold apparatus so as to produce a molded product.

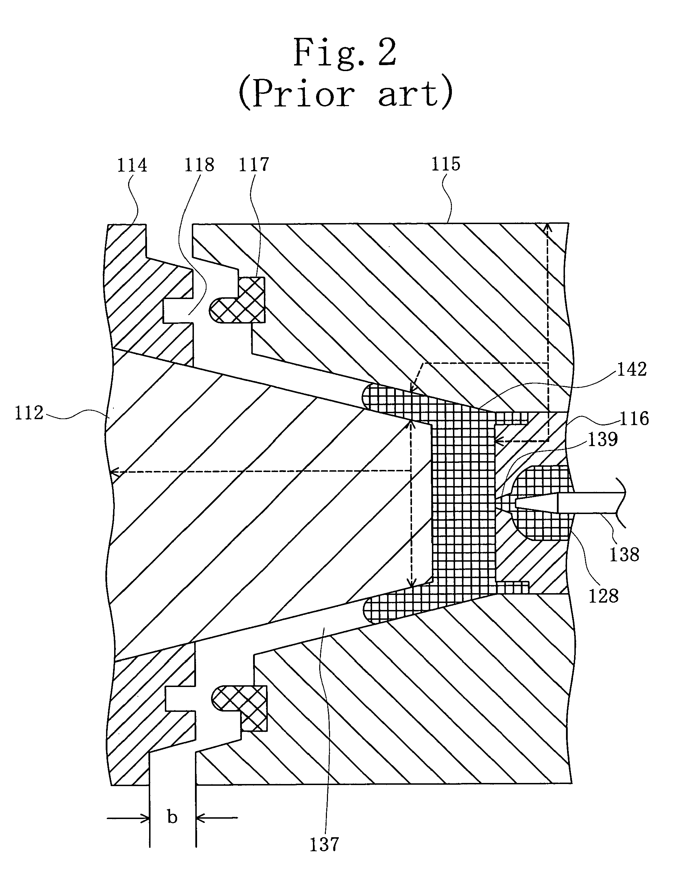

FIG. 2 is a view showing a state in which a molten resin is charged into the cavity in the conventional molding method.

When the mold closing step is started, an unillustrated movable mold approaches a stationary mold. When, as shown in the drawing, the clearance between the parting face of a stripper plate 114 and the parting face of a cavity template 115 becomes a dimension b, the mold closing step is halted. The dimension b is the quantity of compression of the resin and is about 3 to 100 times the thickness of a side wall of the molded product. The quantity of compression is determined on the basis of the thickness of the side wall of the molded product and the viscosity of the molten resin.

While the parting face of the stripper plate 114 and the parting face of the cavity template 115 are opened apart from each other, a valve gate pin 138 retreats and opens a gate hole 139. Subsequently, a molten resin 142 ejected from an unillustrated injection apparatus is charged, through a resin flow path 128, into a cavity 137 between a mold core 112 and a gate block 116, which are in a mold-opened condition. When the molten resin 142 in a predetermined amount is charged into the cavity 137, the valve gate pin 138 advances, thereby closing the gate hole 139. As shown in the drawing, the molten resin 142 is present mainly in a bottom portion of the cavity 137, the bottom portion being sandwiched between the mold core 112 and the gate block 116.

Subsequently, the movable mold advances toward the stationary mold to thereby resume the mold closing step. The resumed mold closing step is a compression step for compressing the molten resin 142. Thus, even in the case where the charging speed for the molten resin 142 cannot be increased, the compression step can shorten the molding time of one shot, so that the throughput of the molding machine can be enhanced.

Performing mold closing narrows the cavity 137. As a result, the molten resin 142 that is present mainly in the bottom portion of the cavity 137, the bottom portion being sandwiched between the mold core 112 and the gate block 116, is pressurized and moves leftward in the drawing within the cavity 137, thereby filling even a portion of the cavity 137 located distant from the gate hole 139 of the side wall portion. Thus, the molten resin 142 fills the entire cavity 137. In this case, as a result of mold closing, the projecting portion of an insert ring 117 is fitted into an insert-ring-receiving groove 118 formed on the parting face of the stripper plate 114. Thus, the molten resin 142 is blocked off by the insert ring 117 and therefore does not leak out through the clearance between the parting faces.

Subsequently, even after completion of mold closing, the movable mold is pressed against the stationary mold, thereby performing mold clamping. In the mold clamping step, the gate hole 139 formed in the gate block 116 is closed by the valve gate pin 138. In the mold clamping step, since the molten resin 142 is compressed, not only does the molten resin 142 reach the entire region of the cavity 137, but also the internal pressure distribution becomes uniform, thereby improving the molecular orientation of the resin, enhancing the performance of transfer from the surface of the mold, preventing sinkage of the resin, reducing residual stress, and preventing deformation.

### DISCLOSURE OF THE INVENTION

### PROBLEMS TO BE SOLVED BY THE INVENTION

However, in order to prevent leakage of the molten resin 142 through the clearance between the parting faces in the resumed mold closing step, the mold used in the conventional molding method is configured such that the projecting portion of the insert ring 117 attached to the cavity template 115 is fitted into the insert-ring-receiving groove 118 formed on the parting face of the stripper plate 114. Accordingly, the insert ring 117 having the projecting portion formed thereon must be attached to the cavity template 115, and the insert-ring-receiving groove 118 must be formed on the parting face of the stripper plate 114. In this manner, in order to prevent leakage of the molten resin 142 through the clearance between the parting faces, a special component member is attached, and a component member of a special structure is used. Thus, the number of component members of the mold increases, and the structure of the mold becomes complicated, resulting in a high cost of the mold.

An object of the present invention is to solve the above-mentioned conventional problems and to provide a molding method in which a movable member, which partially constitutes a mold, is operated in a mold closing step so as to prevent leakage, through a clearance between parting faces, of a molding material which has begun to be charged into a cavity of the mold before completion of the mold closing step, whereby, even when the mold has a simple structure using no special component members, a molded product having a shape resembling that of a three-dimensional, deep-bottomed, concave container having a thin side wall can be produced in a short time, as well as a mold for molding for use in the same, a molded product obtained by the same, and a molding machine for implementing the same.

### MEANS FOR SOLVING THE PROBLEMS

To achieve the above object, in a molding method of the present invention, before completion of a mold closing step of a mold apparatus, a movable member of one mold is pressed against the other mold, the movable member partially defining a cavity of the mold apparatus; charging a molding material into the cavity of the mold apparatus is started; and after completion of the mold closing step, a mold clamping step of the mold apparatus is performed so as to produce a molded product.

In another molding method of the present invention, the movable member is a stripper plate for ejecting the molded product.

In still another molding method of the present invention, the movable member is an intermediate member.

In yet another molding method of the present invention, charging the molding material is completed before completion of the mold closing step.

A mold for molding comprises a stationary mold having a parting face; a movable mold having a parting face to be pressed, in a close contact condition, against the parting face of the stationary mold, and advancing toward the stationary mold; and a movable member movably attached to the movable mold and to be pressed against the stationary mold before completion of a mold closing step of a mold apparatus to thereby partially define a cavity.

In another mold for molding, the movable member is a stripper plate for ejecting a molded product.

In still another mold for molding, the movable member is an intermediate member.

A molded product of the present invention is produced by a molding method according to any one of claims 1 to 4.

Another molded product of the present invention assumes a shape resembling that of a threaded tube comprising a tubular body portion and a threaded shoulder portion.

A molding machine of the present invention produces a molded product by use of a mold apparatus. The mold apparatus comprises a stationary mold having a parting face; a movable mold having a parting face to be pressed, in a close contact condition, against the parting face of the stationary mold, and advancing toward the stationary mold; and a movable member movably attached to the movable mold and to be pressed against the stationary mold before completion of a mold closing step of the mold apparatus to thereby partially define a cavity.

### EFFECTS OF THE INVENTION

According to the present invention, the movable member, which partially constitutes the mold and partially defines the cavity, is operated in the mold closing step to thereby prevent leakage, through a clearance between the parting faces, of resin which has begun to be charged into the cavity of the mold before completion of the mold closing step. Thus, even when the mold has a simple structure using no special component members, a molded product having a shape resembling that of a three-dimensional, deep-bottomed, concave container having a thin side wall can be produced in a short time.

### BRIEF DESCRIPTION OF THE DRAWINGS

[FIG. 1] Sectional view showing the configuration of a mold apparatus according to a first embodiment of the present invention.
[FIG. 2] View showing a state in which a molten resin is charged into a cavity in a conventional molding method.
[FIG. 3] Schematic view showing the configuration of an injection molding machine according to the first embodiment of the present invention.
[FIG. 4] Perspective view of a molded product according to the first embodiment of the present invention.
[FIG. 5] Sectional view of the molded product according to the first embodiment of the present invention.
[FIG. 6] Sectional view of the mold apparatus according to the first embodiment of the present invention, showing a state in which mold closing is to be started.
[FIG. 7] Sectional view of the mold apparatus according to the first embodiment of the present invention, showing a state in the midst of a mold closing step.
[FIG. 8] Sectional view of the mold apparatus according to the first embodiment of the present invention, showing a state in which a molten resin is charged.
[FIG. 9] Sectional view of the mold apparatus according to the first embodiment of the present invention, showing a mold-closed condition.
[FIG. 10] View showing an operation in the mold closing step of the mold apparatus according to the first embodiment of the present invention, and showing, on an enlarged scale, region A of FIG. 9.
[FIG. 11] Sectional view of the mold apparatus according to the first embodiment of the present invention, showing a mold-opened condition.
[FIG. 12] Sectional view of the mold apparatus according to the first embodiment of the present invention, showing a state in which a molded product is ejected.
[FIG. 13] Diagram showing an operation sequence of the molding machine according to the first embodiment of the present invention.
[FIG. 14] Sectional view of a mold apparatus according to a second embodiment of the present invention, showing a mold-closed condition.
[FIG. 15] Sectional view of a mold apparatus according to a third embodiment of the present invention, showing a state in which mold closing is to be started.
[FIG. 16] Sectional view of the mold apparatus according to the third embodiment of the present invention, showing a state in which a molten resin is charged.
[FIG. 17] Sectional view of the mold apparatus according to the third embodiment of the present invention, showing a mold-closed condition.
[FIG. 18] Sectional view of the mold apparatus according to the third embodiment of the present invention, showing a mold-opened condition.
[FIG. 19] Sectional view of the mold apparatus according to the third embodiment of the present invention, showing a state in which a molded product is ejected.

### DESCRIPTION OF REFERENCE NUMERALS

13: stripper plate
23: movable mold
24: stationary mold
37: cavity
41: molded article
45: intermediate member

### BEST MODE FOR CARRYING OUT THE INVENTION

Embodiments of the present invention will next be described with reference to the drawings. A method of the present invention can be applied to various kinds of apparatus and applications. However, for convenience of description, the embodiments will be described while mentioning applications to an injection molding machine.

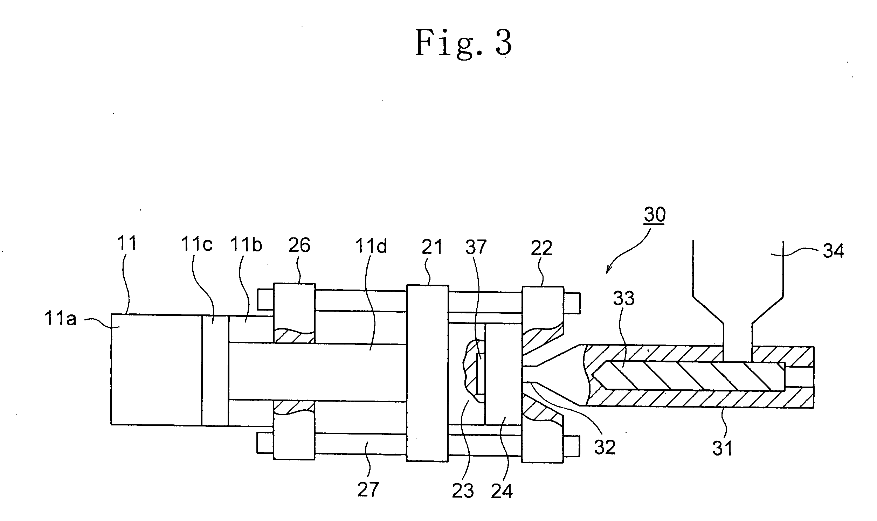

FIG. 3 is a schematic view showing the configuration of an injection molding machine according to a first embodiment of the present invention.

In the drawing, reference numeral 30 denotes an injection apparatus. The injection apparatus 30 includes a heating cylinder 31; an injection nozzle 32 disposed at the front end of the heating cylinder 31; a screw 33 disposed within the heating cylinder 31; and a material feed hopper 34 attached to the heating cylinder 31. Unillustrated drive means rotates, advances (moves leftward), and retreats (moves rightward) the screw 33 in the interior of the heating cylinder 31.

In the injection molding machine, resin, which serves as a molding material, is melted within the heating cylinder 31 through application of heat; the molten resin is injected into a cavity 37 of a mold apparatus, which will be described later; and the resin contained in the cavity 37 is cooled and solidified, thereby producing a molded product. In this case, an unillustrated control unit controls the advancement and retreat of the screw 33. When the resin is charged into the cavity 37, speed control is performed; specifically, the speed of advancing the screw 33 is controlled. When the screw 33 reaches a predetermined position, a predetermined amount of resin is charged into the cavity 37. The predetermined amount corresponds to, for example, about 100% to 150%, preferably about 120%, the volume of the cavity 37 in a mold-closed condition.

The mold apparatus includes a stationary mold 24 and a movable mold 23 and is configured as follows: a mold-clamping apparatus advances and retreats the movable mold 23 so as to bring the movable mold 23 into contact with and move the movable mold 23 away from the stationary mold 24, whereby the mold apparatus can perform mold opening and closing; i.e., mold closing, mold clamping, and mold opening. The mold-clamping apparatus includes a stationary platen 22 for retaining the stationary mold 24, and a movable platen 21 for retaining the movable mold 23, and is operated by driving a hydraulic cylinder apparatus 11.

The stationary platen 22, which serves as a stationary mold support apparatus, is disposed in opposition to the injection apparatus 30. The stationary platen 22 is fixed to an unillustrated frame of the injection molding machine. The stationary mold 24 is mounted on a mold-mounting surface of the stationary platen 22. Ends of a plurality of; for example, four, tie bars 27 are fixed to the stationary platen 22.

The movable platen 21, which serves as a movable-mold support apparatus, is disposed in opposition to the stationary platen 22 and in a manner capable of advancing and retreating along the tie bars 27. Further, the movable mold 23 is mounted on the mold-mounting surface of the movable platen 21, the mold-mounting surface being in opposition to the stationary platen 22.

A drive-source support member 26 is attached to the tie bars 27, in opposition to the back surface of the movable platen 21 and in a positionally adjustable condition. The hydraulic cylinder apparatus 11, which serves as a drive source for the mold-clamping apparatus of the injection molding machine, is attached to the back surface (left-hand surface in the drawing) of the drive-source support member 26. In this case, the hydraulic cylinder apparatus 11 includes a head-side hydraulic chamber 11a; a rod-side hydraulic chamber 11b; a piston 11c; and a rod 11d. The head-side hydraulic chamber 11a is disposed on the piston 11c, on a side opposite the rod 11d, and the rod-side hydraulic chamber 11b is disposed on the piston 11c, on a side toward the rod 11d. The rod 11d is inserted into a through hole formed in the drive-source support member 26, and an end portion thereof is connected to the movable platen 21.

In the present embodiment, no limitation is imposed on the type of the mold-clamping apparatus and on the type of the drive source for the mold-clamping apparatus. For example, the mold-clamping apparatus may be of a straight-hydraulic type as shown in FIG. 3, of a toggle type that utilizes a toggle link, or a composite type in which a link mechanism and a cylinder apparatus are combined. The drive source may be a hydraulic cylinder apparatus as shown in FIG. 3, or a combination of an electric motor and a ball screw.

Further, an unillustrated ejector apparatus and a drive source for the ejector apparatus are attached to the rear surface of the movable platen 21. The ejector apparatus is of, for example, a straight-hydraulic type. As in the case of the drive source for the mold-clamping apparatus, the drive source may be a hydraulic cylinder apparatus or a combination of an electric motor and a ball screw.

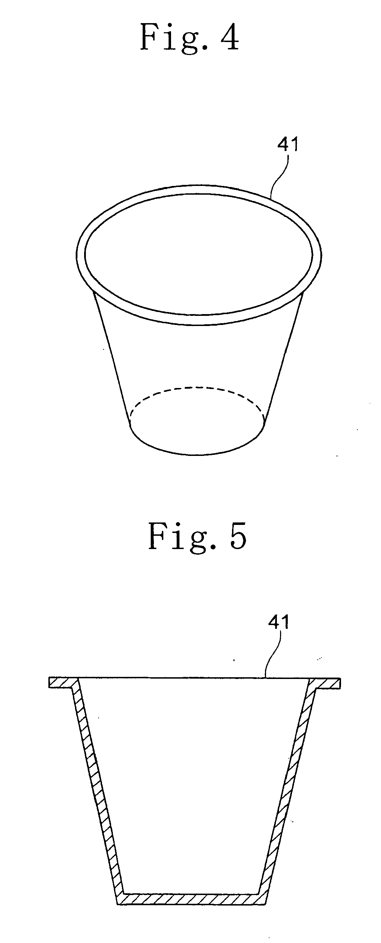

FIG. 4 is a perspective view of a molded product according to the first embodiment of the present invention. FIG. 5 is a sectional view of the molded product according to the first embodiment of the present invention.

In the present embodiment, a molded product to be produced may assume any shape. The molding method, the mold for molding, and the molding machine according to the present embodiment are characterized in that they can be applied to molding for a molded product 41, which, as shown in FIGS. 4 and 5, has a shape resembling that of a three-dimensional, deep-bottomed, concave container having a thin side wall. Herein, molding for the molded product 41 having a shape resembling that of a three-dimensional, deep-bottomed, concave container having a thin side wall will be described. The molded product 41 whose shapes resemble that of a three-dimensional, deep-bottomed, concave container having a thin side wall include containers for foods, such as jelly and pudding; cups; containers; caps of containers; and parisons or preforms for use in blow molding. The molded products 41 may be speaker cones for use in loudspeakers, various kinds of cartridges, flowerpots, and like products of any other kind. The molded product 41 to be produced in the present embodiment has, for example, a depth of 10 mm or more and a side wall thickness of 0.2 mm to 3 mm, usually about 1 mm.

The present embodiment may use any kind of molding material. The molding method, the mold for molding, and the molding machine according to the present embodiment are characterized in that they can produce the molded product 41 from a highly viscous resin, which serves as a molding material, in a short time with high accuracy. Therefore, herein, molding for the molded product 41 of a highly viscous resin will be described. The highly viscous resin is a thermoplastic resin having a melt viscosity of 3,600 poise or more, or a melt index of 21 or more, or a number average molecular weight of 24,000 or more. Examples of such a highly viscous resin include PET (polyethylene terephthalate), PC (polycarbonate), PMMA (polymethyl methacrylate), HDPE (high density polyethylene), and AS (styrene/acrylonitrile). Further, the present embodiment may use, as molding materials, environmental low-load-type materials, whose load imposed on the environment is low, such as recyclable materials, readily recyclable materials, reusable materials, readily reusable materials, biodegradable materials to be degraded by microorganisms such as bacteria, and materials rarely containing substances conceivably harmful to the environment, such as chlorine. Examples of environmental low-load-type materials include biodegradable materials, such as biodegradable resins also called biodegradable plastics; vegetable-fiber-containing materials prepared by mixing a material containing vegetable fibers, such as paper, pulp, wood, or the like, with a resin; and earth-rock-containing materials prepared by mixing a material containing natural earth-and-rock, such as earth, talc, or the like, with a resin. The environmental low-load-type material may be an appropriate combination of a biodegradable material, a vegetable-fiber-containing material, an earth-rock-containing material, and the like. Preferably, in view of load imposed on the environment, the vegetable-fiber-containing materials and the earth-rock-containing materials have a low resin content; for example, less than 50%. However, they may be of any kind. The present embodiment will be described while mentioning resin as a molding material.

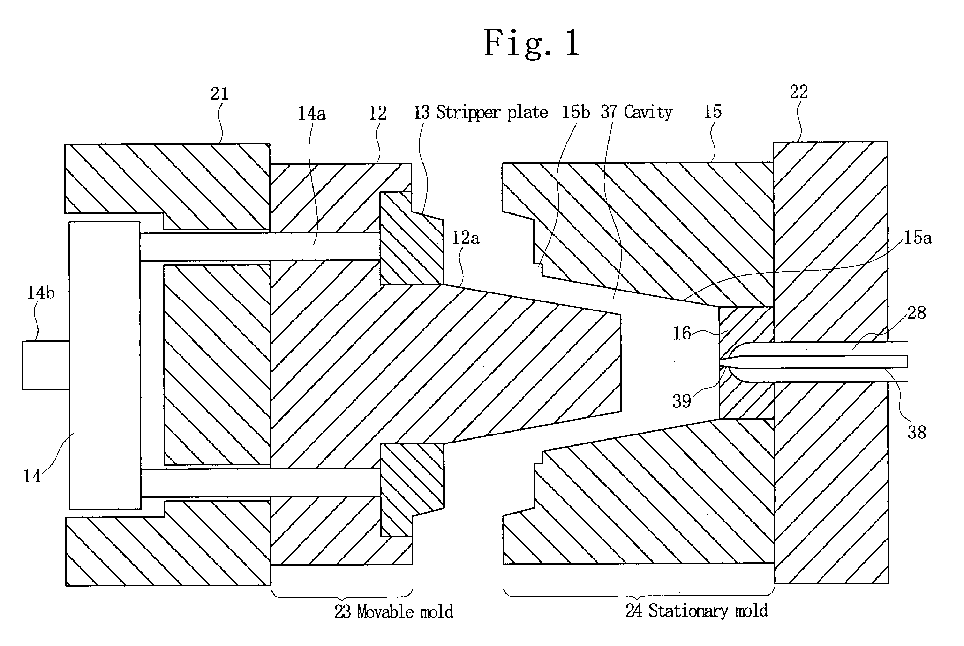

FIG. 1 is a sectional view showing the configuration of a mold apparatus according to the first embodiment of the present invention.

In FIG. 1, reference numeral 12 denotes a mold core of the movable mold 23 mounted on the mold-mounting surface of the movable platen 21; reference numeral 13 denotes a stripper plate that serves as an ejector (a molded-product-ejecting member) for ejecting the molded product 41 from the movable mold 23. The stripper plate 13 partially constitutes the movable mold 23 and partially defines the cavity 37. Reference numeral 15 denotes a cavity template of the stationary mold 24 mounted on the mold-mounting surface of the stationary platen 22; and reference numeral 16 denotes a gate block fitted into the cavity template 15. The mold core 12 has a projecting portion 12a for forming the inner side wall and the inner bottom surface of the deep-bottomed, concave molded product 41; the cavity template 15 has a recess portion 15a for forming the outer side wall of the molded product 41, and a stepped portion 15b for forming the lower surface of a flange of the molded product 41; the stripper plate 13 forms the upper surface of the flange of the molded product 41; and the gate block 16 forms the outer bottom surface of the molded product 41. In the mold-closed condition, the mold core 12, the stripper plate 13, the cavity template 15, and the gate block 16 define the cavity 37 corresponding to the molded product 41.

A resin flow path 28, such as a sprue, for allowing flow of resin ejected from the injection nozzle 32 disposed at the front end of the heating cylinder 31 is formed in the stationary platen 22. A gate hole 39 for establishing communication between the interior of the cavity 37 and the resin flow path 28 is formed in the gate block 16. This allows a molten resin 42 (to be described later) ejected from the injection nozzle 32 to be charged into the cavity 37. The resin flow path 28 may be a hot runner having a heating unit.

A tongue and a groove may be respectively formed on the mutually contacting faces of the stripper plate 13 and the cavity template 15; i.e., on the parting faces of the movable mold 23 and the stationary mold 24, so as to form a tongue-and-groove joint. However, as illustrated, the present embodiment will be described while mentioning the case where a tongue and a groove for forming a tongue-and-groove joint are not formed.

An ejector plate 14 of the ejector apparatus for driving the stripper plate 13 is attached to the movable platen 21 in a manner capable of advancing and retreating (moving in the left-right direction in FIG. 1). An ejector rod 14b connected to the drive source of the ejector apparatus is attached to the rear surface (left-hand surface in FIG. 1) of the ejector plate 14. Connection rods 14a connected to the stripper plate 13 are attached to the front surface (right-hand surface in FIG. 1) of the ejector plate 14. The connection rods 14a are disposed, in an axially movable manner, in corresponding insertion holes formed in the movable platen 21 and the mold core 12. When the ejector apparatus is operated to advance (move rightward in FIG. 1) the ejector plate 14, the stripper plate 13 moves away from the mold core 12 and projects toward the cavity template 15. When the ejector plate 14 is retreated (moved leftward in FIG. 1), the stripper plate 13 is retracted and, as shown in FIG. 1, brought into close contact with the mold core 12.

FIG. 1 shows a state in which a valve gate pin 38, which serves as a gate pin, is advanced into the resin flow path 28. A base portion of the valve gate pin 38 is attached to an unillustrated pneumatic cylinder apparatus, which serves as a drive mechanism, attached to the stationary platen 22. The valve gate pin 38 is moved in the opening-closing direction of the mold apparatus; i.e., in the lateral direction in FIG. 1. In the state shown in FIG. 1, the tip end of the valve gate pin 38 is advanced into the gate hole 39 and closes the gate hole 39, and the pneumatic cylinder apparatus is in a dwell condition and keeps pressing the valve gate pin 38 toward the gate hole 39 with a predetermined force. The tip end of the valve gate pin 38 is subjected to a force that is induced by the pressure of the resin contained in the cavity 37 and presses the valve gate pin 38 toward the pneumatic cylinder apparatus. When the pressure of the resin contained in the cavity 37 attains a predetermined value or higher, the gate hole 39 is opened. In other words, when the pressure of the resin contained in the cavity 37 attains a predetermined value or higher, the resin overcomes the force that presses the valve gate pin 38 toward the gate hole 39, thereby moving the valve gate pin 38 toward the pneumatic cylinder apparatus. Thus, the valve gate pin 38 opens the gate hole 39. As a result, the resin leaks into the resin flow path 28 from the cavity 37, so that the pressure of the resin contained in the cavity 37 drops. When the pressure of the resin drops below the predetermined value, the force that presses the valve gate pin 38 toward the gate hole 39 overcomes the pressure of the resin. Therefore, the tip end of the valve gate pin 38 again closes the gate hole 39.

In this manner, the valve gate pin 38 functions as a constant-pressure valve or a relief valve for maintaining the pressure of the resin contained in the cavity 37 below the predetermined value. Unless the pressure of the resin contained in the cavity 37 attains the predetermined value or higher, the tip end of the valve gate pin 38 maintains such a condition as to be advanced into the gate hole 39 and to close the gate hole 39. Thus, even when the molten resin 42 contained in the cavity 37 is pressurized and compressed, the molten resin 42 does not leak out from the gate hole 39.

Next, the operation of the thus-configured molding machine will be described.

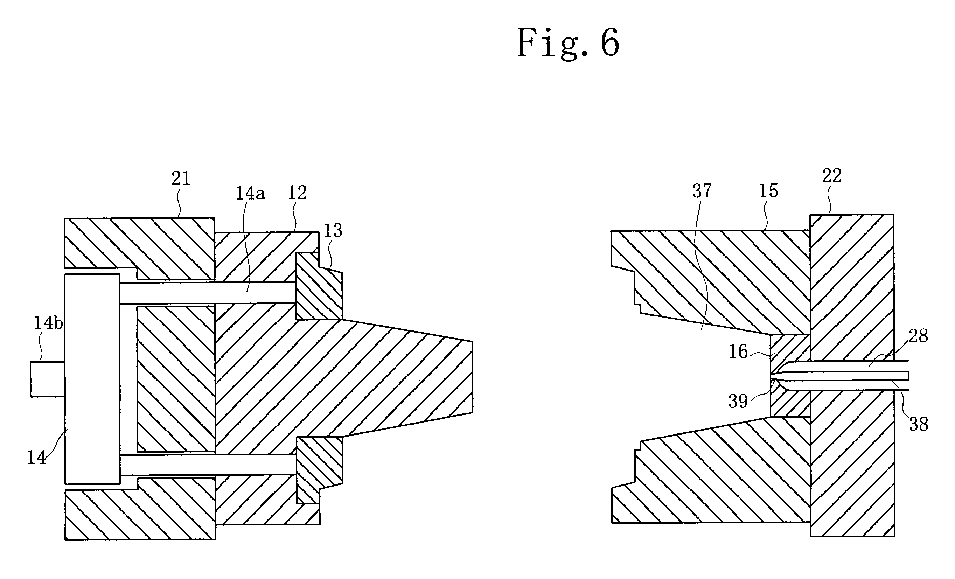

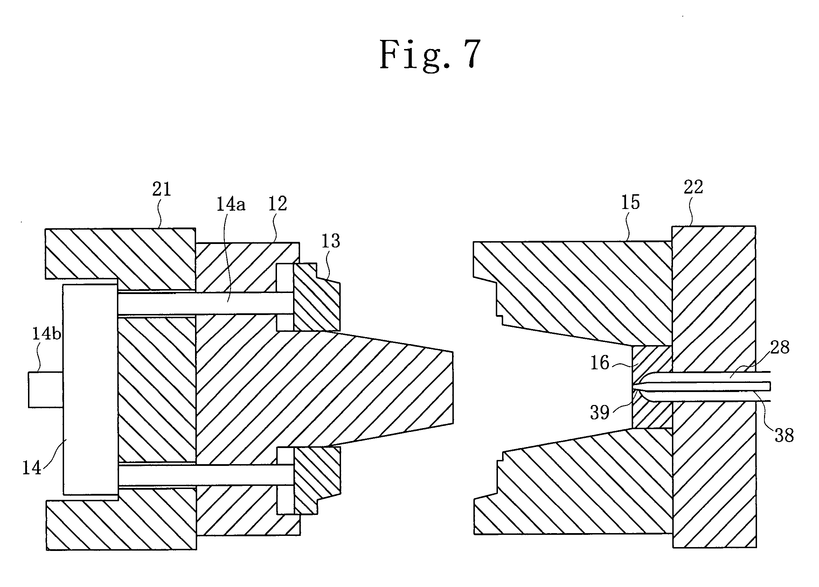

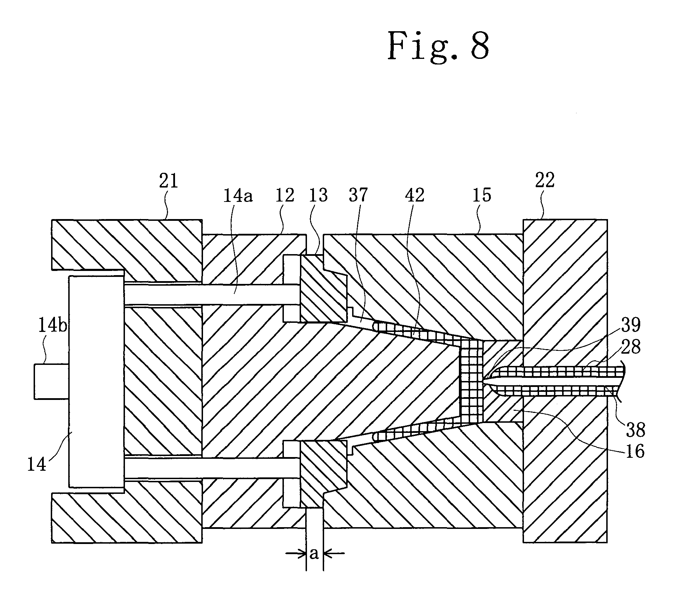

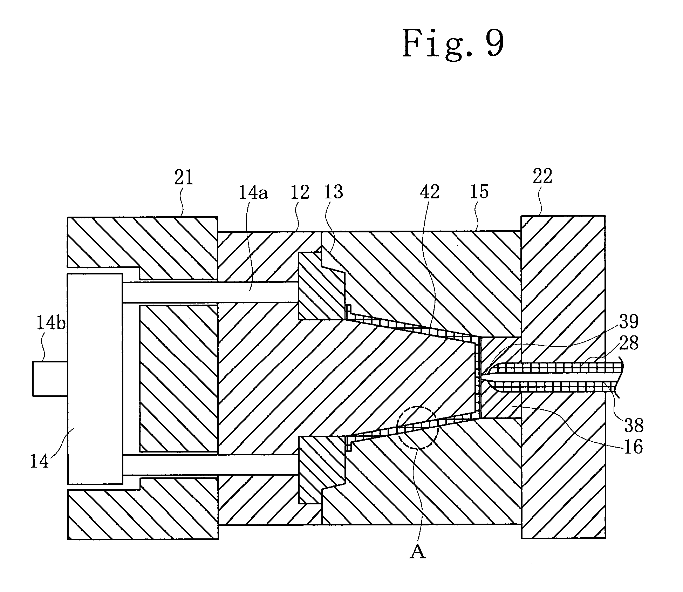

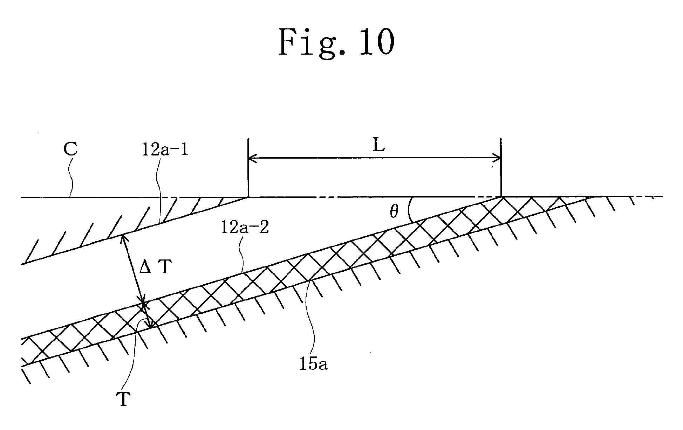

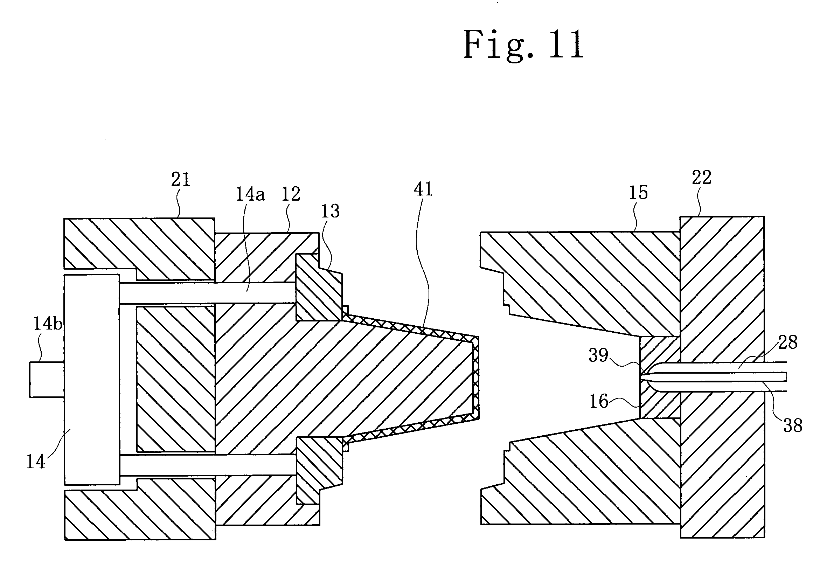

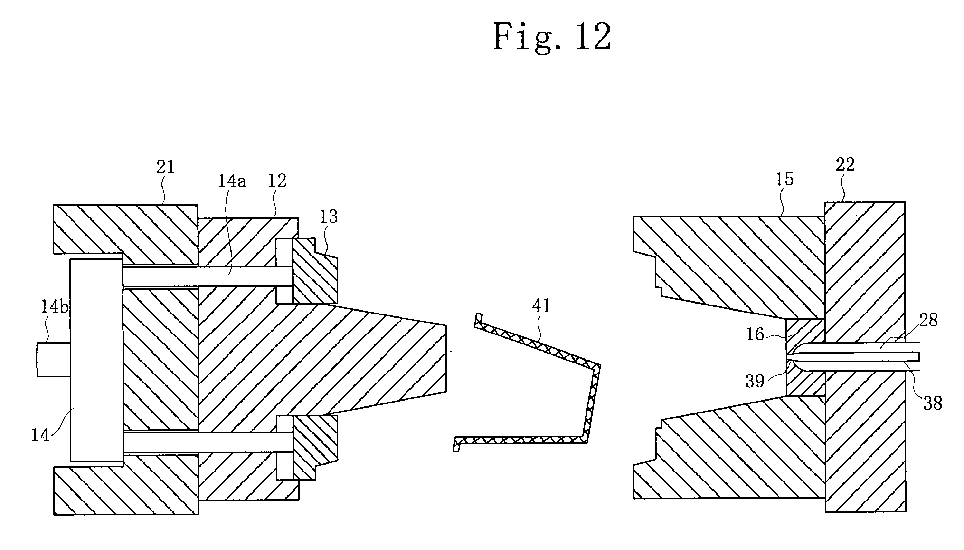

FIG. 6 is a sectional view of the mold apparatus according to the first embodiment of the present invention, showing a state in which mold closing is to be started; FIG. 7 is a sectional view of the mold apparatus according to the first embodiment of the present invention, showing a state in the midst of a mold closing step; FIG. 8 is a sectional view of the mold apparatus according to the first embodiment of the present invention, showing a state in which the molten resin is charged; FIG. 9 is a sectional view of the mold apparatus according to the first embodiment of the present invention, showing a mold-closed condition; FIG. 10 is a view showing an operation in the mold closing step of the mold apparatus according to the first embodiment of the present invention, and showing, on an enlarged scale, region A of FIG. 9; FIG. 11 is a sectional view of the mold apparatus according to the first embodiment of the present invention, showing a mold-opened condition; and FIG. 12 is a sectional view of the mold apparatus according to the first embodiment of the present invention, showing a state in which a molded product is ejected.

First, before molding is started, the piston 11c and the rod 11d of the hydraulic cylinder apparatus 11 are in a retreated condition (in a condition moved leftward in FIG. 3). Thus, the mold apparatus is in the mold-opened condition as shown in FIG. 6. Also, the ejector plate 14 is retreated (moved leftward in FIG. 6), and the stripper plate 13 is retracted and brought into a close contact with the mold core 12. Further, the valve gate pin 38 is in a condition such that its tip end is advanced into the gate hole 39, thereby closing the gate hole 39.

Subsequently, when the mold closing step is started, the hydraulic cylinder apparatus 11 is driven, whereby the piston 11c and the rod 11d advance (move rightward in FIG. 3), thereby causing the movable platen 21 to advance. Thus, the movable mold 23 approaches the stationary mold 24. Also, the ejector apparatus is operated so as to advance the ejector plate 14. Accordingly, as shown in FIG. 7, the stripper plate 13 moves away from the mold core 12 and projects toward the cavity template 15.

Subsequently, the movable mold 23 further approaches the stationary mold 24. When, as shown in FIG. 8, the parting face of the stripper plate 13 abuts the parting face of the cavity template 15, the hydraulic cylinder apparatus 11 stops, thereby halting the mold closing step. At this point of time, the clearance between the parting face of the mold core 12 and the parting face of the cavity template 15 assumes a dimension a. The dimension a is the quantity of compression of the resin and is about 3 to 100 times the thickness of the side wall of the molded product 41. The dimension a is usually about 1 mm to 15 mm. The quantity of compression is determined on the basis of the thickness of the side wall of the molded product 41 and the viscosity of the molten resin (molding material) 42. Desirably, when the wall thickness of the molded product 41 is 1 mm to 1.5 mm, the quantity of compression is 3 to 10 times the wall thickness; and when the wall thickness of the molded product 41 is 0.2 mm to 1 mm, the quantity of compression is 10 to 100 times the wall thickness.

While, as shown in FIG. 8, the parting face of the mold core 12 and the parting face of the cavity template 15 are opened apart from each other, the valve gate pin 38 retreats and opens the gate hole 39. As a result of the ejector apparatus being operated, the parting face of the stripper plate 13 is pressed against the parting face of the cavity template 15 with a predetermined pressing force.

Subsequently, the molten resin 42 ejected from the injection nozzle 32 disposed at the front end of the heating cylinder 31 is charged, through the resin flow path 28, into the cavity 37 between the mold core 12 and the gate block 16, which are in the mold-opened condition. When the molten resin 42 in a predetermined amount is charged into the cavity 37, the valve gate pin 38 advances. The tip end of the valve gate pin 38 advances into the gate hole 39, thereby closing the gate hole 39.

In this case, a bottom portion of the cavity 37 is filled with the molten resin 42, the bottom portion being substantially perpendicular to the opening-closing direction of the mold apparatus. However, a portion of a side wall portion of the cavity 37 located distant from the gate hole 39 is not charged with the molten resin 42, the side wall portion being inclined in relation to the opening-closing direction of the mold apparatus. In other words, in the present embodiment, upon completion of the charging of the molten resin 42 in the predetermined amount, at least a portion of the side wall portion is not charged with the molten resin 42.

As shown in FIG. 8, since the volume of the bottom portion is relatively large, the molten resin 42 is present mainly in the bottom portion of the cavity 37, the bottom portion being sandwiched between the mold core 12 and the gate block 16. The time during which the mold closing step is halted is very short. Further, the parting face of the stripper plate 13 is pressed against the parting face of the cavity template 15. Accordingly, while the mold closing step is halted, the molten resin 42 does not leak out to the outside from the cavity 37. Desirably, in order to shorten, to the greatest possible extent, the time during which the mold closing step is halted, the charging speed for the molten resin 42 is increased to the greatest possible extent. Notably, a halt to the mold closing step may be eliminated. This shortens the molding time of one shot, so that the throughput of the molding machine can be enhanced.

Subsequently, the hydraulic cylinder apparatus 11 resumes driving, causing the movable mold 23 to advance toward the stationary mold 24 to thereby resume the mold closing step. The charging of the molten resin 42 may be continued in the course of the resumed mold closing step. The resumed mold closing step is a compression step for compressing the molten resin 42. Thus, even in the case where the charging speed for the molten resin 42 cannot be increased, this can shorten the molding time of one shot, so that the throughput of the molding machine can be enhanced.

Performing mold closing narrows the cavity 37. As a result, the molten resin 42 that is present mainly in the bottom portion of the cavity 37, the bottom portion being sandwiched between the mold core 12 and the gate block 16, is pressurized and moves leftward in FIG. 8 within the cavity 37, thereby filling even a portion of the cavity 37 located distant from the gate hole 39 of the side wall portion. Thus, the molten resin 42 fills the entire cavity 37. In this case, since the parting face of the stripper plate 13 is pressed against the parting face of the cavity template 15, the molten resin 42 does not leak out through the clearance between the parting faces of the movable mold 23 and the stationary mold 24.

Subsequently, as shown in FIG. 9, even after completion of mold closing, the hydraulic cylinder apparatus 11 presses the movable mold 23 against the stationary mold 24, thereby performing mold clamping. In this case, since the cavity template 15 presses the stripper plate 13, the stripper plate 13 and the ejector plate 14 are caused to retreat (move leftward in FIG. 9) to a position where they assume a condition similar to that before the mold closing step is started as shown in FIG. 6. In the mold clamping step, the gate hole 39 formed in the gate block 16 is closed by the valve gate pin 38. In the mold clamping step, since the molten resin 42 is compressed, not only does the molten resin 42 reach the entire region of the cavity 37, but also the internal pressure distribution becomes uniform, thereby improving the molecular orientation of the resin, enhancing the performance of transfer from the surface of the mold, preventing sinkage of the resin, reducing residual stress, and preventing deformation.

Next will be described the flow of the molten resin 42 within the side wall portion inclined in relation to the opening-closing direction of the mold apparatus in the mold closing step in which the movable mold 23 advances toward the stationary mold 24. FIG. 10 shows, on an enlarged scale, a portion of the side wall portion encircled by circle A of FIG. 9. In the mold closing step, since the movable mold 23 approaches the stationary mold 24, the surface of the mold core 12 and the surface of the cavity template 15 undergo relative approach to each other.

In this case, in an initial stage of the mold closing step, the surface of the mold core 12 is located at a position denoted by reference numeral 12a-1. The surface of the cavity template 15 is located at a position denoted by reference numeral 15a. The angle of inclination of the side wall portion in relation to the opening-closing direction of the mold apparatus is θ. Until completion of the mold closing step, the surface of the mold core 12 moves up to a position denoted by reference numeral 12a-2. This indicates that the clearance between the surface of the mold core 12 and the surface of the cavity template 15 in the initial stage of the mold closing step is ΔT greater than a clearance T between the surface of the mold core 12 and the surface of the cavity template 15 at the time of completion of the mold closing step. ΔT is the product of a mold-closing stroke L and sinθ. For example, in the case where θ is 4 degrees, ΔT is 0.2 mm at an L of 3 mm; ΔT is 0.4 mm at an L of 6 mm; ΔT is 0.7 mm at an L of 10 mm; and ΔT is 1 mm at an L of 15 mm.

In the present embodiment, as mentioned previously, charging the resin into the cavity 37 in a predetermined amount is completed before the mold closing step is completed. This indicates that the molten resin 42 flows at the time when the clearance between the surface of the mold core 12 and the surface of the cavity template 15 as measured at the side wall portion is ΔT greater than the clearance T as measured upon completion of the mold closing step. Therefore, in the case where the side wall portion is inclined in relation to the opening-closing direction of the mold apparatus, even though the clearance between the surface of the mold core 12 and the surface of the cavity template 15 as measured at the side wall portion is narrow, the molten resin 42 flows smoothly and fills the entire side wall portion, since the molten resin 42 flows at the time when the clearance is large. Accordingly, even though, as shown in FIG. 8, a portion of the side wall portion located distant from the gate hole 39 is not charged with the molten resin 42 at the time when charging the resin into the cavity 37 in a predetermined amount is completed, the portion of the side wall portion located distant from the gate hole 39 is also charged with the molten resin 42 as shown in FIG. 9 at the end of the mold closing step.

As described above, since the side wall portion is inclined in relation to the opening-closing direction of the mold apparatus, a wedge effect is yielded, so that the molten resin 42 spreads throughout the cavity 37. Thus, the internal pressure distribution becomes uniform, thereby improving the molecular orientation of the resin, enhancing optical properties of the resin, enhancing the performance of transfer from the surface of the mold, reducing occurrence of weld lines, preventing sinkage of the resin, reducing residual stress, and preventing deformation. In the case where the cavity 37 is charged excessively with the resin, excess resin is caused to flow back to the resin flow path 28. Specifically, a drive source, such as a pneumatic cylinder, presses the valve gate pin 38 toward the gate hole 39 with a predetermined pressure. When the resin contained in the cavity 37 attains a predetermined pressure or higher, the valve gate pin 38 fails to resist the pressure and retreats, thereby opening the gate hole 39. As a result, the resin leaks into the resin flow path 28 from the cavity 37, so that the pressure of the resin contained in the cavity 37 drops. When the pressure of the resin contained in the cavity 37 drops below the predetermined value, the valve gate pin 38 opens the gate hole 39. Therefore, the valve gate pin 38 is pressed toward the gate hole 39 and again closes the gate hole 39.

Subsequently, the molten resin 42 is cooled to a certain extent and solidified. When the molded product 41 is produced, mold opening is performed. As shown in FIG. 11, the movable mold 23 and the stationary mold 24 open apart from each other.

Subsequently, the molded product 41 is ejected. When the molded product 41 adheres to the outer surface of the mold core 12, the ejector apparatus is operated so as to advance the ejector plate 14. This causes the stripper plate 13 to move away from the mold core 12 and to project toward the cavity template 15. By this procedure, as shown in FIG. 12, the molded product 41 separates from the mold core 12 and drops. In the case where dropping potentially damages the molded product 41, the molded product 41 can be detached from the mold core 12 by use of an unillustrated molded-product-unloading machine, instead of being dropped.

Next, operation sequences of the molding machine will be described.

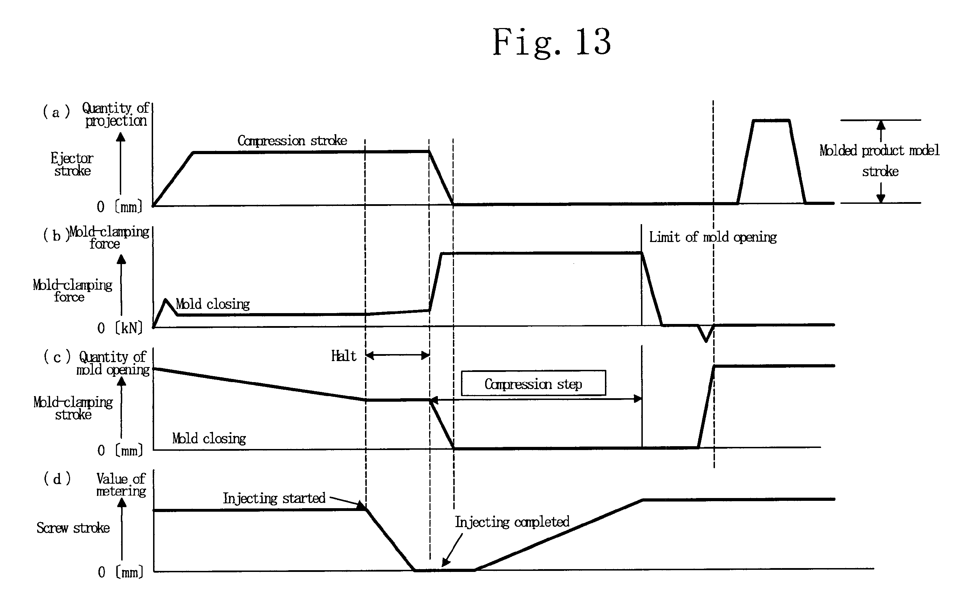

FIG. 13 is a diagram showing an operation sequence of the molding machine according to the first embodiment of the present invention.

In the present embodiment, when the first operation sequence is executed, the mold-clamping apparatus and the injection apparatus 30 of the molding machine are operated as shown in FIG. 13. First, FIG. 13(a) shows a change, with time, in the stroke of the stripper plate 13, which serves as an ejector. In FIG. 13(a), the horizontal axis represents time, and the vertical axis represents the quantity of projection. FIG. 13(b) shows a change, with time, in a mold-clamping force that the clamping apparatus applies to the movable mold 23. In FIG. 13(b), the horizontal axis represents time, and the vertical axis represents the magnitude of the mold-clamping force. FIG. 13(c) shows a change in the stroke of the mold-clamping apparatus with time. In FIG. 13(c), the horizontal axis represents time, and the vertical axis represents the position of the movable mold 23. The value represented by the vertical axis reduces as the movable mold 23 advances; i.e., as the movable mold 23 approaches the stationary mold 24. FIG. 13(d) represents a change in the stroke of the screw 33 of the injection apparatus 30 with time. In FIG. 13(d), the horizontal axis represents time, and the vertical axis represents the position of the screw 33. The value represented by the vertical axis reduces as the screw 33 advances; i.e., as the screw 33 approaches the injection nozzle 32. FIGS. 13(a) to 13(d) employ the same scale for the respective horizontal axes that represent time.

When the mold apparatus in the mold-opened condition as shown in FIG. 6 starts the mold closing step, the movable mold 23 advances to approach the stationary mold 24. The stripper plate 13 advances away from the mold core 12 and projects toward the cavity template 15.

When the movable mold 23 reaches a predetermined distance to the stationary mold 24; i.e., when the clearance between the parting face of the mold core 12 and the parting face of the cavity template 15 becomes the dimension a as shown in FIG. 8, the operation of the mold-clamping apparatus halts, and thus the movement of the movable mold 23 halts. At this point of time, the parting face of the stripper plate 13 abuts the parting face of the cavity template 15.

Also, at this point of time, the valve gate pin 38 is retreated and opens the gate hole 39. In the injection apparatus 30 that has been undergoing a metering step for metering the molten resin 42 by rotating the screw 33, an injection step is started, thereby advancing the screw 33. By this procedure, the molten resin 42 is ejected from the injection nozzle 32, thereby starting charging of the molten resin 42 into the cavity 37.

In this case, the advancing movement of the screw 33 is controlled by an unillustrated control unit. When the molten resin 42 is charged into the cavity 37, speed control is performed so as to control the speed of advancing the screw 33. When the screw 33 reaches a predetermined position, the cavity 37 is charged with the molten resin 42 by a predetermined amount.

Subsequently, the mold-clamping apparatus resumes operating, thereby resuming the mold closing step. In the course of the mold closing step, charging the molten resin 42 is completed. In other words, the molten resin 42 is charged into the cavity 37 in an amount that must be charged. Notably, desirably, time between the halt of the movement of the movable mold 23 and the resumption of the mold closing step; i.e., halt time, is shortened to the greatest possible extent. Shortening the halt time to the greatest possible extent such that the halt time becomes as close to 0 second as possible can shorten the molding time of one shot, whereby the throughput of the molding machine can be enhanced.

The resumed mold closing step is included in a compression step for compressing the molten resin 42. Even in the case where the charging speed for the molten resin 42 cannot be increased, this can shorten the molding time of one shot, so that the throughput of the molding machine can be enhanced.

When the entire amount of the molten resin 42 is charged, the valve gate pin 38 advances, and the tip end of the valve gate pin 38 advances into the gate hole 39, thereby closing the gate hole 39. After charging the molten resin 42 is completed, the screw 33 is retreated. This reduces the quantity of the molten resin 42 remaining in the resin flow path 28. Thus, when, as a result of the pressure of the molten resin 42 contained in the cavity 37 attaining a predetermined value or higher, the valve gate pin 38 opens the gate hole 39, and the molten resin 42 leaks out from the cavity 37 to the resin flow path 28, the leaking molten resin 42 is received within the resin flow path 28.

Subsequently, the parting face of the mold core 12 and the parting face of the cavity template 15 contact each other, thereby completing the mold closing step. The mold-clamping apparatus increases the mold-clamping force so as to perform mold clamping. In this case, since the cavity template 15 presses the stripper plate 13, the stripper plate 13 and the ejector plate 14 are caused to retreat to a position where they assume a condition similar to that before the mold closing step is started.

The mold closing step reduces the volume of the cavity 37 to thereby pressurize and compress the molten resin 42 contained in the cavity 37. Accordingly, the molten resin 42 spreads throughout the cavity 37, so that the entire cavity 37 is filled with the molten resin 42. Further, the mold clamping step subsequent to the mold closing step also pressurizes and compresses the molten resin 42 contained in the cavity 37. Accordingly, the molten resin 42 spreads throughout the cavity 37, so that the cavity 37 is completely filled with the molten resin 42.

The mold-clamping apparatus maintains the increased mold-clamping force, thereby performing high-pressure mold clamping. In the high-pressure mold clamping, the movable mold 23 does not advance, but remains stationary. Thus, the molten resin 42 is subjected to a compressive force, so that the internal pressure distribution becomes uniform, thereby improving the molecular orientation of the resin, enhancing optical properties of the resin, enhancing the performance of transfer from the surface of the mold, reducing occurrence of weld lines, preventing sinkage of the resin, reducing residual stress, and preventing deformation. When the pressure of the molten resin 42 contained in the cavity 37 attains a predetermined value or higher, the valve gate pin 38 opens the gate hole 39, so that the molten resin 42 leaks out to the resin flow path 28 from the cavity 37; thus, the mold apparatus and the mold-clamping apparatus are free from damage.

Subsequently, when the molten resin 42 is cooled to a certain extent and solidified, and the compression step is completed, the mold-clamping apparatus lowers the mold-clamping force. When the molded product 41 is produced, mold opening is performed; i.e., the movable mold 23 retreats away from the stationary mold 24. The stripper plate 13 advances away from the mold core 12 and projects toward the cavity template 15. This causes the molded product 41 to drop away from the mold core 12. Subsequently, the above-described sequence is repeated so as to produce a predetermined number of molded products 41.

As described above, according to the present embodiment, the molten resin 42 is charged into the cavity 37 while the parting faces of the movable mold 23 and the stationary mold 24 are separated from each other; subsequently, mold closing and mold clamping are performed. Thus, mold closing greatly reduces the volume of the cavity 37, so that the molten resin 42 contained in the cavity 37 is subjected to high pressure. Accordingly, even when the molten resin 42 is highly viscous, the molten resin 42 passes through a narrow portion of the cavity 37 corresponding to a side wall portion of the molded product 41 and reaches the depth of the cavity 37. The molten resin 42 spreads throughout the cavity 37, and the cavity 37 is completely filled with the molten resin 42. Further, since the molten resin 42 is subjected to a compressive force, the internal pressure distribution becomes uniform, thereby improving the molecular orientation of the resin, enhancing the performance of transfer from the surface of the mold, preventing sinkage of the resin, reducing residual stress, and preventing deformation.

Thus, even when a molded product have a shape resembling that of a three-dimensional, deep-bottomed, concave container having a thin side wall, the molded product can be produced from a highly viscous resin in a short time with high accuracy. Also, a molded product can have a high L/T ratio, where L is the length of flow of the resin as measured from a gate, and T is the wall thickness of the molded product.

Further, the stripper plate 13, which is a movable member that partially constitutes the movable mold 23 and partially defines the cavity 37, is operated to advance, in the mold closing step such that the parting face of the stripper plate 13 is pressed against the parting face of the cavity template 15. Accordingly, the molten resin 42 which has begun to be charged into the cavity 37 of the mold before completion of the mold closing step does not leak out through the clearance between the parting faces of the movable mold 23 and the stationary mold 24. Thus, no burr is produced on the molded product 41. Therefore, even though the movable mold 23 and the stationary mold 24 are simply configured such that no special component members are employed, the molded product 41 having high quality and a shape resembling that of a three-dimensional, deep-bottomed, concave container having a thin side wall can be produced in a short time.

Next, a second embodiment of the present invention will be described. Structural elements similar to those of the first embodiment are denoted by like reference numerals, and repeated description thereof is omitted. Also, repeated description of operations and effects similar to those of the first embodiment is omitted.

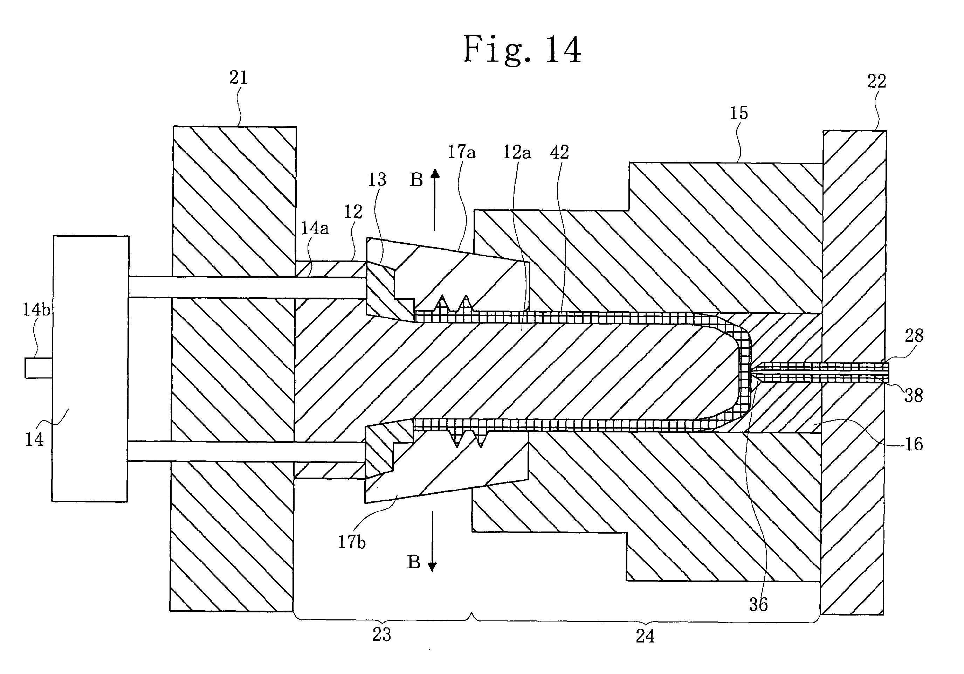

FIG. 14 is a sectional view of a mold apparatus according to the second embodiment of the present invention, showing a mold-closed condition.

As shown in FIG. 14, the mold apparatus according to the present embodiment is suited for molding a threaded container. A split-type block; i.e., a split block 17a and a split block 17b, are disposed on the movable block 23, for forming a threaded portion, which assumes the form of an undercut. In this case, a groove portion corresponding to a spiral ridge of thread is formed on the split blocks 17a and 17b. In a mold-closed condition, the mold core 12, the stripper plate 13, the split block 17a, the split block 17b, the cavity template 15, and the gate block 16 define the cavity 37 corresponding to the molded product 41.

Mold closing is performed as shown in FIG. 14, and then mold clamping is performed. The molten resin 42 is cooled to a certain extent and solidified. When the molded product 41 is produced, mold opening is performed. In this case, in the mold opening step, the split blocks 17a and 17b are moved along a direction perpendicular to the moving direction of the movable mole 23; i.e., in the directions represented by arrows B. Accordingly, when the ejector apparatus is operated so as to advance the ejector plate 14, the molded product 41 drops away from the mold core 12.

As described above, in the present embodiment, the split blocks 17a and 17b can be moved along a direction perpendicular to the opening-closing direction of the mold apparatus. Thus, even in the case where formation of an undercut is involved, the molded product 41 can be ejected by performing mold opening, without damaging the molded product 41.

Next, a third embodiment of the present invention will be described. Structural elements similar to those of the first and second embodiments are denoted by like reference numerals, and repeated description thereof is omitted. Also, repeated description of operations and effects similar to those of the first and second embodiments is omitted.

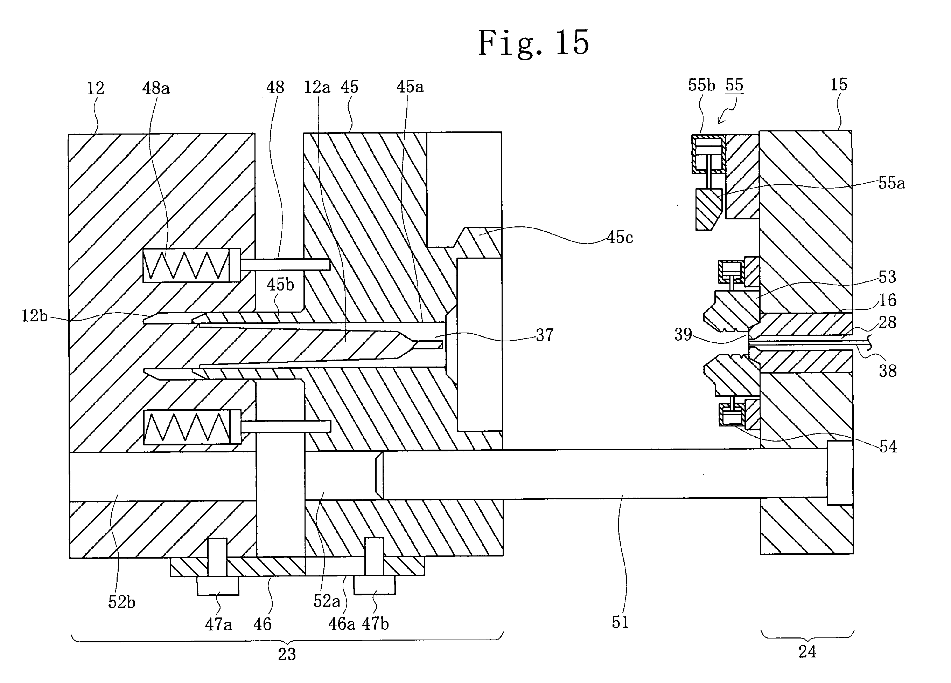

FIG. 15 is a sectional view of a mold apparatus according to the third embodiment of the present invention, showing a state in which mold closing is to be started.

The present embodiment will be described while mentioning a molding method suited for producing a molded product having a shape resembling that of a threaded tube for containing a liquid product, a semiliquid product, or a liquified solid product, such as jellied cosmetics, pasty food, or toothpaste. According to a conventional molding method, a molded product having a shape resembling that of a threaded tube is produced as follows: a tubular body portion of the product and a threaded shoulder portion of the product are formed as separate members in different molding processes; subsequently, the formed tubular body portion and the formed threaded shoulder portion are fused together. By contrast, according to the present embodiment, a molded product having a shape resembling that of a threaded tube including a tubular body portion and a threaded shoulder portion is integrally formed by injection molding.

In FIG. 15, reference numeral 45 denotes an intermediate member which is movably attached to the mold core 12 of the movable mold 23 and partially defines the cavity 37, and reference numeral 53 denotes a threaded-portion split block which is movably attached to the cavity template 15 of the stationary mold 24. The intermediate member 45 is a movable member which partially constitutes the movable mold 23.

A guide rod 51 projecting toward the movable mold 23 is fixed to the cavity template 15. A guide rod insertion hole 52a and a guide rod insertion hole 52b, into which the guide rod 51 is inserted, are formed in the intermediate member 45 and the mold core 12, respectively. Insertion of the guide rod 51 into the guide rod insertion holes 52a and 52b allows the intermediate member 45 and the movable core 12 to move in the mold closing step and the mold clamping step and to be positioned in relation to each other. An attachment plate 46 restricts the range of movement of the intermediate member 45 relative to the mold core 12. In this case, one end of the attachment plate 46 is fixed to a side wall of the mold core 12 by a fixing member 47a, such as a bolt. A side wall of the intermediate member 45 is slidably attached to the attachment plate 46 by a fixing member 47b, such as a bolt, slidably inserted into an elongated hole 46a formed in the attachment plate 46. A cylindrical projecting portion 45b is formed integrally with the intermediate member 45. A recess portion 12b having an annular cross section is formed in the mold core 12. The projecting portion 45b is inserted into the recess portion 12b, thereby forming a recess portion 45a at the inside of the projecting portion 45b.

Presser rods 48 are disposed on the mold core 12 in an axially movable manner. Tip ends of the presser rods 48 are attached to the intermediate member 45. A base portion of each of the presser rods 48 is attached to a presser unit 48a which includes a spring member and a pneumatic cylinder device, whereby the presser rods 48 are urged to project toward the stationary mold 24. Accordingly, the intermediate member 45 is always urged to advance and project away from the mold core 12; i.e., toward the stationary mold 24. The projecting portion 12a of the mold core 12 is formed inside the recess portion 12b.

The threaded-portion split block 53 is divided into an upper member and a lower member in FIG. 15. Split block drive units 54, such as hydraulic cylinder units or pneumatic cylinder units, attached to the cavity template 15 drive the corresponding upper and lower members so as to move the upper and lower members along a direction perpendicular to a direction along which the movable mold 23 moves; i.e., along a vertical direction in FIG. 15. Further, an intermediate-member retainer apparatus 55 for fixing the position of the intermediate member 45 in the mold closing step and the mold clamping step is attached to the cavity template 15. The intermediate-member retainer apparatus 55 includes a movable engagement member 55a, which engages with an engagement projection 45c formed integrally with the intermediate member 45, and a movable-engagement-member drive unit 55b, such as a hydraulic cylinder unit or a pneumatic cylinder unit, attached to the cavity template 15 so as to move the movable engagement member 55a in a direction perpendicular to a direction along which the movable mold 23 moves; i.e., in a vertical direction in FIG. 15.

In the mold-closed condition, the mold core 12, the intermediate member 45, the threaded-portion split block 53, the cavity template 15, and the gate block 16 define the cavity 37 corresponding to the molded product 41.

Next, the operation of the thus-configured molding machine will be described.

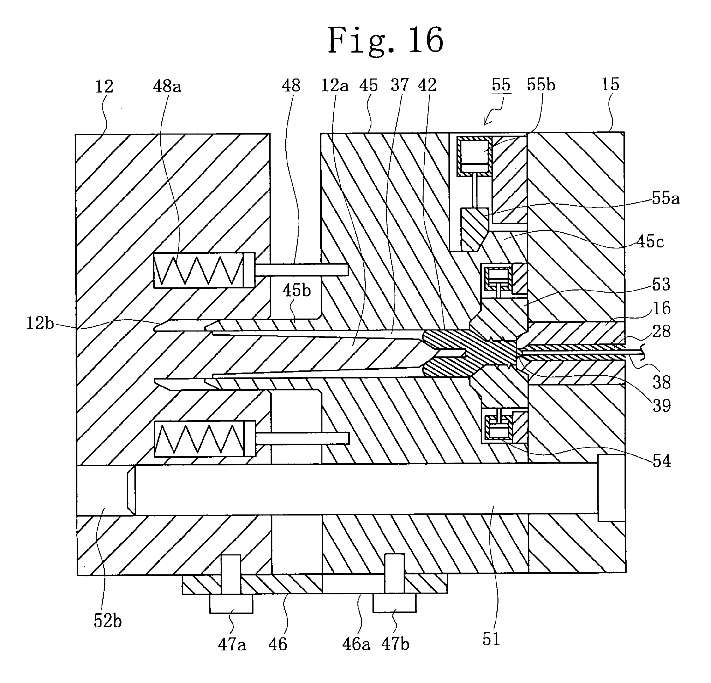

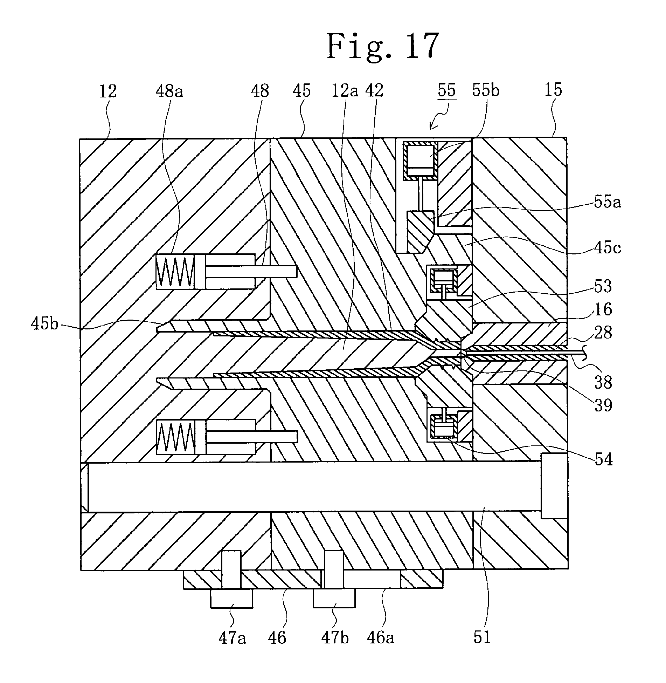

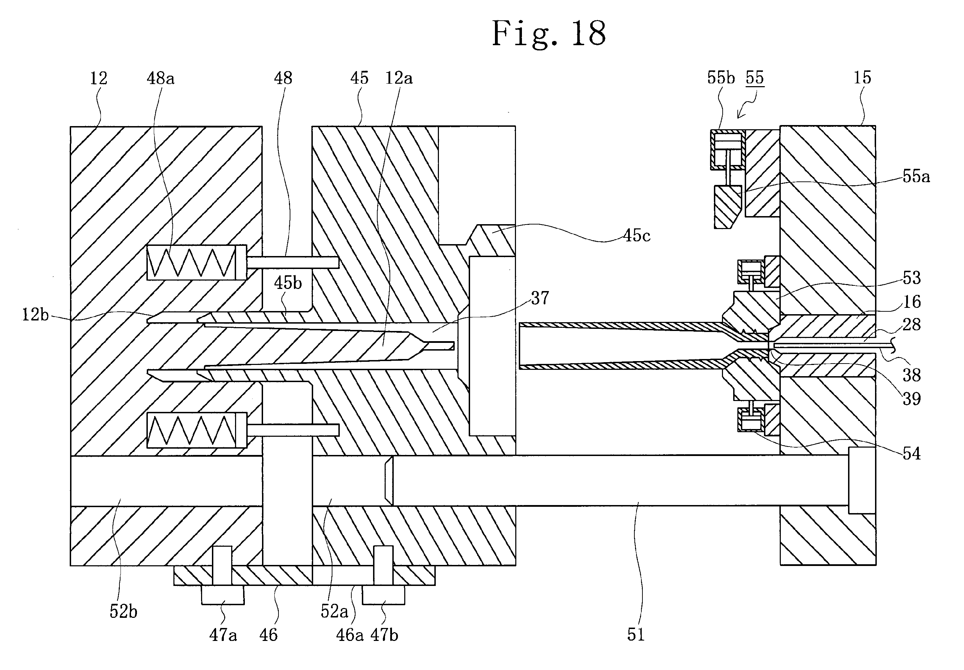

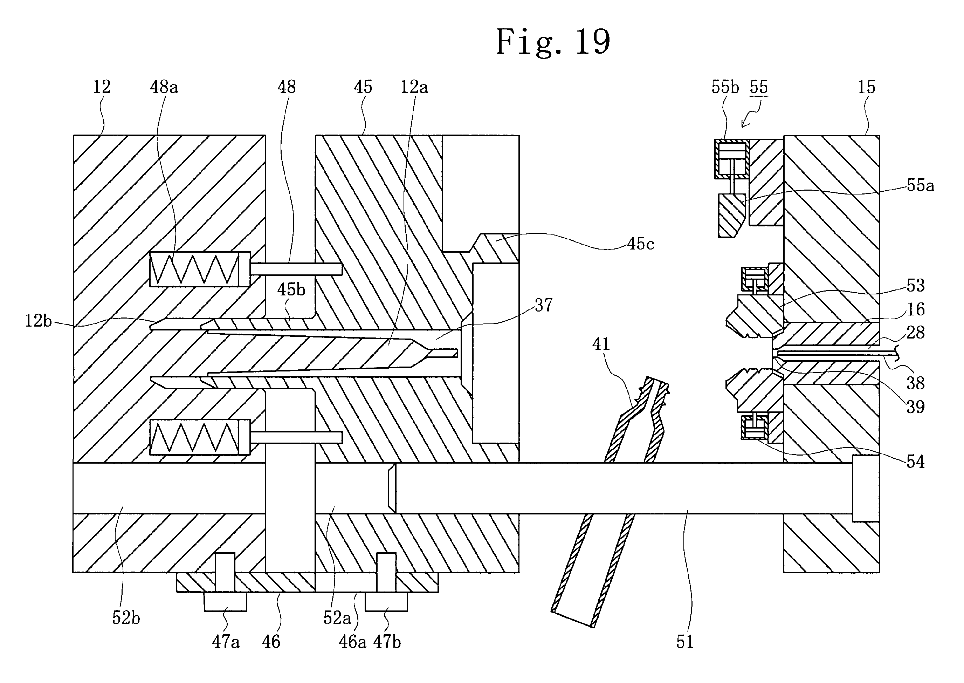

FIG. 16 is a sectional view of the mold apparatus according to the third embodiment of the present invention, showing a state in which a molten resin is charged; FIG. 17 is a sectional view of the mold apparatus according to the third embodiment of the present invention, showing a mold-closed condition; FIG. 18 is a sectional view of the mold apparatus according to the third embodiment of the present invention, showing a mold-opened condition; and FIG. 19 is a sectional view of the mold apparatus according to the third embodiment of the present invention, showing a state in which a molded product is ejected.

First, before molding is started, the piston 11c and the rod 11d of the hydraulic cylinder apparatus 11 are in a retreated condition (in a condition moved leftward in FIG. 3). Thus, the mold apparatus is in the mold-opened condition as shown in FIG. 15. Also, the presser units 48a urge the intermediate member 45 to project away from the mold core 12 toward the cavity template 15. Further, the valve gate pin 38 is in a condition such that its tip end is advanced into the gate hole 39, thereby closing the gate hole 39.

Subsequently, when the mold closing step is started, the hydraulic cylinder apparatus 11 is driven, whereby the piston 11c and the rod 11d advance (move rightward in FIG. 3), thereby causing the movable platen 21 to advance. Thus, the movable mold 23 approaches the stationary mold 24.

Subsequently, the movable mold 23 further approaches the stationary mold 24. When, as shown in FIG. 16, the parting face of the intermediate member 45 abuts the parting faces of the cavity template 15 and the threaded-portion split block 53, the hydraulic cylinder apparatus 11 stops, thereby halting the mold closing step. At this point of time, the movable-engagement-member drive unit 55b causes the movable engagement member 55a to move and engage with the engagement projection 45c of the intermediate member 45. This joins the intermediate member 45 and the cavity template 15 together, thereby fixing their mutual positional relation. The presser units 48a cause the parting face of the intermediate member 45 to be pressed against the parting faces of the cavity template 15 and the threaded-portion split block 53 with a predetermined pressing force. While, as shown in FIG. 16, the mold core 12 and the intermediate member 45 are opened apart from each other, the valve gate pin 38 retreats and opens the gate hole 39.

Subsequently, the molten resin 42 ejected from the injection nozzle 32 disposed at the front end of the heating cylinder 31 is charged, through the resin flow path 28, into the cavity 37 defined by the mold core 12, the intermediate member 45, the threaded-portion split block 53, and the gate block 16, which are in the mold-opened condition. When the molten resin 42 in a predetermined amount is charged into the cavity 37, the valve gate pin 38 advances. The tip end of the valve gate pin 38 advances into the gate hole 39, thereby closing the gate hole 39.

In this case, a portion of the cavity 37 around the periphery of the threaded-portion split block 53 near the gate hole 39 is filled with the molten resin 42. However, a portion of the cavity 37 located distant from the gate hole 39 is not charged with the molten resin 42. In other words, in the present embodiment, upon completion of the charging of the molten resin 42 in the predetermined amount, at least a portion of the cavity 37 is not charged with the molten resin 42.

As shown in FIG. 16, since the volume of the portion of the cavity 37 around the periphery of the threaded-portion split block 53 is relatively large, the molten resin 42 is present mainly around the threaded-portion split block 53 in the cavity 37. The time during which the mold closing step is halted is very short. Further, the parting face of the intermediate member 45 is pressed against the parting face of the threaded-portion split block 53, and the projecting portion 45b of the intermediate member 45 is inserted into the recess portion 12b of the mold core 12. Accordingly, while the mold closing step is halted, the molten resin 42 does not leak out to the outside from the cavity 37. Desirably, in order to shorten, to the greatest possible extent, the time during which the mold closing step is halted, the charging speed for the molten resin 42 is increased to the greatest possible extent. Notably, a halt to the mold closing step may be eliminated. This shortens the molding time of one shot, so that the throughput of the molding machine can be enhanced.

Subsequently, the hydraulic cylinder apparatus 11 resumes driving, causing the movable mold 23 to advance toward the stationary mold 24 to thereby resume the mold closing step. The charging of the molten resin 42 may be continued in the course of the resumed mold closing step. The resumed mold closing step is a compression step for compressing the molten resin 42. Thus, even in the case where the charging speed for the molten resin 42 cannot be increased, this can shorten the molding time of one shot, so that the throughput of the molding machine can be enhanced.

Performing mold closing narrows the cavity 37. As a result, the molten resin 42 that is present mainly in the portion of the cavity 37 around the periphery of the threaded-portion split block 53, the portion being in the vicinity of the gate hole 39, is pressurized and moves leftward in FIG. 16 within the cavity 37, thereby filling even a portion of the cavity 37 located distant from the gate hole 39. Thus, the molten resin 42 fills the entire cavity 37. In this case, since the parting face of the intermediate member 45 is pressed against the parting face of the threaded-portion split block 53, and the projecting portion 45b of the intermediate member 45 is inserted into the recess portion 12b of the mold core 12, the molten resin 42 does not leak out from the cavity 37.

A portion of the cavity 37 between the intermediate member 45 and the mold core 12 is tapered such that its clearance becomes narrower as the distance from the gate hole 39 increases; i.e., as the leftward distance from the gate hole 39 in FIG. 16 increases. In this case, desirably, the side wall of the projecting portion 12a of the mold core 12 is tapered. Accordingly, in the portion of the cavity 37 between the intermediate member 45 and the mold core 12, the side wall portion is inclined in relation to the opening-closing direction of the mold apparatus. Thus, even though the clearance between the surface of the mold core 12 and the surface of the cavity template 15 as measured at the side wall portion is narrow, the molten resin 42 flows smoothly and fills the entire portion between the intermediate member 45 and the mold core 12, since the molten resin 42 flows at the time when the clearance is large.

Accordingly, even though, as shown in FIG. 16, a portion of the side wall portion between the intermediate member 45 and the mold core 12 located distant from the gate hole 39 is not charged with the molten resin 42 at the time when charging the resin into the cavity 37 in a predetermined amount is completed, a portion of the space between the intermediate member 45 and the mold core 12, the portion being located away from the gate hole 39 is also charged with the molten resin 42 as shown in FIG. 17 at the end of the mold closing step. As mentioned above, since the side wall portion is inclined in relation to the opening-closing direction of the mold apparatus, a wedge effect is yielded, so that the molten resin 42 spreads throughout the cavity 37. Thus, the internal pressure distribution becomes uniform, thereby improving the molecular orientation of the resin, enhancing optical properties of the resin, enhancing the performance of transfer from the surface of the mold, reducing occurrence of weld lines, preventing sinkage of the resin, reducing residual stress, and preventing deformation.

Subsequently, as shown in FIG. 17, even after completion of mold closing, the hydraulic cylinder apparatus 11 presses the movable mold 23 against the stationary mold 24, thereby performing mold clamping. In this case, since the movable platen 21 presses the mold core 12, the mold core 12 and the intermediate member 45 are in close contact with each other. In the mold clamping step, the gate hole 39 formed in the gate block 16 is closed by the valve gate pin 38. In the mold clamping step, since the molten resin 42 is compressed, not only does the molten resin 42 reach the entire region of the cavity 37, but also the internal pressure distribution becomes uniform, thereby improving the molecular orientation of the resin, enhancing the performance of transfer from the surface of the mold, preventing sinkage of the resin, reducing residual stress, and preventing deformation.

Subsequently, the molten resin 42 is cooled to a certain extent and solidified. When the molded product 41 is produced, mold opening is performed. As shown in FIG. 18, the movable mold 23 and the stationary mold 24 open apart from each other. Before the mold opening is performed, the movable-engagement-member drive unit 55b operates so as to return the movable engagement member 55a back to the position before mold closing was performed, thereby disengaging the intermediate member 45 and the engagement projection 45c from each other. This allows the intermediate member 45 to retreat away from the cavity template 15.

The threaded-portion split block 53 is adapted to form a threaded portion that assumes the form of an undercut. Specifically, a spiral ridge of thread is circumferentially formed on a tip end portion (a right-hand end portion in FIG. 17) of a threaded shoulder portion of the molded product 41 having a shape resembling that of a threaded tube, thereby forming an undercut. Accordingly, when mold opening is performed, while the threaded-portion split block 53 holds the tip end portion of the threaded shoulder portion of the molded product 41, a portion other than the tip end portion of the molded product 41; i.e., a tubular body portion of the molded product 41, is extracted from the portion of the cavity 37 between the intermediate member 45 and the mold core 12.

As mentioned above, the portion of the cavity 37 between the intermediate member 45 and the mold core 12 is tapered such that its clearance becomes narrower as the distance from the gate hole 39 increases. Accordingly, the tubular body portion of the molded product 41 corresponding to the portion of the cavity 37 between the intermediate member 45 and the mold core 12 becomes thinner in wall thickness as the distance from the threaded shoulder portion increases. That is, the longitudinal section of the tubular body portion of the molded product 41 has a tapered shape. This allows the tubular body portion of the molded product 41 to be smoothly extracted from the portion of the cavity 37 between the intermediate member 45 and the mold core 12.

Subsequently, the molded product 41 is ejected. In this case, the split block drive units 54 are operated, thereby moving the upper and lower members of the threaded-portion split block 53 along a direction perpendicular to the moving direction of the movable mold 23. Thus, the distance between the upper and lower members of the threaded-portion split block 53 is expanded. This releases a tip end portion of the molded product 41 from retainment by the threaded-portion split block 53, so that, as shown in FIG. 19, the molded product 41 drops away from the mold core .12. In the case where dropping potentially damages the molded product 41, the molded product 41 can be detached from the mold core 12 by use of an unillustrated molded-product-unloading machine, instead of being dropped.

As described above, according to the present embodiment, the molten resin 42 is charged into the cavity 37 in the midst of the mold closing step; subsequently, mold closing and mold clamping are performed. Thus, mold closing greatly reduces the volume of the cavity 37, so that the molten resin 42 contained in the cavity 37 is subjected to high pressure. Accordingly, even in the case of producing the molded product 41 having a shape resembling that of a threaded tube, the molten resin 42 passes through a narrow portion of the cavity 37 corresponding to a tubular body portion of the molded product 41 and reaches the depth of the cavity 37. The molten resin 42 spreads throughout the cavity 37, and the cavity 37 is completely filled with the molten resin 42. Further, since the molten resin 42 is subjected to a compressive force, the internal pressure distribution becomes uniform, thereby improving the molecular orientation of the resin, enhancing the performance of transfer from the surface of the mold, preventing sinkage of the resin, reducing residual stress, and preventing deformation.

Thus, the molded product 41 having a shape resembling that of a threaded tube including a tubular body portion and a threaded shoulder portion can be integrally formed.

The above embodiments are described while mentioning a hydraulic mold-clamping apparatus. However, a motor-driven mold-clamping apparatus is preferred. The above embodiments are also described while mentioning a horizontal injection molding machine, in which the movable platen moves laterally (horizontally). However, the molding method, the mold for molding, and the molding machine of the present invention can also be applied to a vertical injection molding machine, in which the movable platen moves longitudinally (vertically). Further, the molding method, the mold for molding, and the molding machine of the present invention can be applied not only to injection molding machines but also to other molding machines as die casting machines and IJ sealing presses.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to a molding method, a mold for molding, a molded product, and a molding machine.

## Claims

1. A molding method **characterized by** comprising:
(a) pressing, before completion of a mold closing step of a mold apparatus, a movable member of one mold against the other mold, the movable member partially defining a cavity of the mold apparatus;
(b) starting charging of a molding material into the cavity of the mold apparatus; and
(c) performing, after completion of the mold closing step, a mold clamping step of the mold apparatus so as to produce a molded product.

2. A molding method according to claim 1, wherein the movable member is a stripper plate for ejecting the molded product.

3. A molding method according to claim 1, wherein the movable member is an intermediate member.

4. A molding method according to claim 1, wherein charging the molding material is completed before completion of the mold closing step.

5. A mold for molding **characterized by** comprising:
(a) a stationary mold having a parting face;
(b) a movable mold having a parting face to be pressed, in a close contact condition, against the parting face of the stationary mold, and advancing toward the stationary mold; and
(c) a movable member movably attached to the movable mold and to be pressed against the stationary mold before completion of a mold closing step of a mold apparatus to thereby partially define a cavity.

6. A mold for molding according to claim 5, wherein the movable member is a stripper plate for ejecting a molded product.

7. A mold for molding according to claim 5, wherein the movable member is an intermediate member.

8. A molded product produced by a molding method according to any one of claims 1 to 4.

9. A molded product according to claim 8 assuming a shape resembling that of a threaded tube comprising a tubular body portion and a threaded shoulder portion.

10. A molding machine for:
(a) producing a molded product by use of a mold apparatus,
(b) **characterized in that** the mold apparatus comprises a stationary mold having a parting face;
(c) a movable mold having a parting face to be pressed, in a close contact condition, against the parting face of the stationary mold, and advancing toward the stationary mold; and
(d) a movable member movably attached to the movable mold and to be pressed against the stationary mold before completion of a mold closing step of the mold apparatus to thereby partially define a cavity.
